# EUROPEAN PATENT APPLICATION

(11) **EP 4 671 291 A1**
(43) Date of publication of application: **31.12.2025**
(21) Application number: 24184695.5
(22) Date of filing: 26.06.2024
(51) Int. Cl.: C08F 290/06, C08G 18/32, C09J 175/16

(54) **ADHESIVE COMPOSITION AND CURED PRODUCT THEREOF**

(71) Applicant: Henkel AG & Co. KGaA, 40589 Düsseldorf (DE)
(72) Inventor: Kikuchi, Yukari, Yokohama-shi, Kanagawa-ken, 2200031 (JP)

(57) **Abstract**

The present invention is to provide an adhesive composition having excellent surface hardening, adhesive strength and toughness. The present invention relates to an adhesive composition comprising (a) a urethane (meth)acrylate oligomer based on a heterocyclic polyol; (b) a butadiene resin; (c) a bismaleimide; and (d) a radical initiator.

## Description

### Technical Field

The present invention relates to an adhesive composition and a cured product thereof.

### Background

In the production of cameras and sensor module integrators, adhesives are used to bond electronic components to substrates. First, these adhesives are required to maintain excellent adhesiveness after curing. In particular, they are required to maintain excellent adhesiveness even in a reliability test in a high-temperature and high-humidity environment.

Secondly, these adhesives are also required to have excellent crack resistance. Adhesives containing an epoxy resin are used for the applications described above. Although they have good results in the reliability test, cracks are likely to form due to overly high hardness after curing. Further, adhesives containing an epoxy resin have problems that curing at a low temperature tends to be insufficient due to the soft segment of the epoxy resin, and that they are difficult to use due to their overly high viscosity.

In view of this, JP 2016117860 A discloses a conductive resin composition which is solventless, has low viscosity, and exhibits low elasticity after curing. The conductive resin composition contains (A) a specific polyethylene glycol di(meth)acrylate, (B) a radical generator, (C) a conductive filler, and (D) at least one selected from the group consisting of linear alkanediol di(meth)acrylates having a 5-14C linear alkylene group, monofunctional and bifunctional polyester (meth)acrylates, and terminal-modified polybutadiene rubbers.

Further, JP 2018159042 A discloses a conductive adhesive having high adhesive strength between a resin substrate and a metal case after curing. The conductive resin composition contains (A) a (meth)acrylate monomer with solubility in 25°C water 100 g of 50 g or more, (B) a phosphoric acid-modified (meth)acrylate monomer (excluding (A)), (C) a compound having two or more unsaturated double bonds in one molecule, excluding the (meth) acrylate monomer, with solubility in 25°C water 100 g of less than 50 g, and (D) a conductive filler.

In addition, EP 3907252 A1 discloses an adhesive composition having excellent adhesiveness and crack resistance. The conductive adhesive composition comprising (a) a (meth)acrylic acid ester monomer, (b) a tackifier, (c) bismaleimide, and (d) a radical initiator, wherein a homopolymer of the (meth)acrylic acid ester monomer (a) has a glass transition temperature (Tg) of 50°C or lower, and the tackifier (b) has a Hazen unit colour number of 300 or less.

In radical polymerization reactions of (meth)acrylic resins, adhesive surface hardening after curing is often problematic due to oxygen inhibition. Urethane (meth)acrylate oligomers having polycarbonate backbones excel in strength and impact resistance but exhibit inferior adhesive surface curing after hardening. On the other hand, urethane (meth)acrylate oligomers having ester backbones demonstrate superior strength but suffer from poor adhesive surface hardening and impact resistance. Urethane (meth)acrylate oligomers with ether backbones exhibit excellent adhesive surface hardening after curing but have low adhesion. As described above, developing an adhesive composition that excels in all properties of adhesive surface hardening, toughness, and adhesion using various urethane (meth)acrylate oligomers has been challenging.

### Summary of Invention

An object of the present invention is to provide an adhesive composition exhibiting excellent after-curing performance in view of adhesive surface hardening, toughness, and adhesion.

The present inventor conducted extensive studies to solve the above problems and conceived of using a urethane (meth)acrylate oligomer based on a heterocyclic polyol in an adhesive composition. The present invention has been completed upon further studies based on the above findings and includes the following aspects.

In one aspect, the invention relates to an adhesive composition comprising:
(a) a urethane (meth)acrylate oligomer based on a heterocyclic polyol;
(b) a butadiene resin;
(c) a bismaleimide; and
(d) a radical initiator.

In one embodiment, the urethane (meth)acrylate oligomer is based on an oxygen-containing heterocyclic polyol, a nitrogen-containing heterocyclic polyol or a sulfur-containing heterocyclic polyol.

In another embodiment, the urethane (meth)acrylate oligomer is based on a heterocyclic polyol is based on a heterocyclic polyol selected from the group consisting of isosorbide, isomannide, isoidide, spiroglycol, tetrahydrofuran diol, Corey lactone diol, pyrimidine-2,4-diol, 1,2-dithiane-3,6-diol, p-dithiane-2,5-diol, 2-methylpyridine-3,5-diol, furo[3,2-d]pyrimidine-2,4-diol, 7H-pyrrolo[2,3-d]pyrimidine-2,4-diol, 1,2,3,9-tetrahydropyrrolo[2,1-b]quinazoline-3,7-diol, tetrahydro-2H-pyran-2,3,5-triol, tris(2-hydroxyethyl)isocyanurate, and combination thereof, and preferably is isosorbide.

In yet another embodiment, the butadiene resin is a maleic anhydride grafted polybutadiene.

In yet another embodiment, the bismaleimide is selected from the group consisting of 4,4'-diphenyl methane bismaleimide, 2,2'-bis-[4-(4-maleimidephenoxy)phenyl]propane, 3,3'-dimethyl-5,5'-diethyl-4,4'-diphenyl methane bismaleimide, and combination thereof.

In yet another embodiment, the radical initiator is selected from peroxides and azo-compounds, and is preferably selected from the group consisting of di(4-tert-butylcyclohexyl) peroxydicarbonate, tert-butyl peroxyneodecanoate, tert-butyl peroxypivalate, dilauroyl peroxide, 2,2'-azodi(isobutyronitrile), 2,5-dimethyl-2,5-di(2-ethylhexanoylperoxy)-hexane, tert-butyl peroxy-2-ethylhexanoate, tert-butyl peroxybenzoate, and combination thereof.

In yet another embodiment, the adhesive composition further comprises a (meth)acrylic acid ester monomer.

In yet another embodiment, the adhesive composition further comprises a tackifier.

In another aspect, the invention relates to the use of the adhesive composition according to any of the preceding claims in assembling a camera module or a sensor.

In yet another aspect, the invention relates to the cured product obtainable by curing the adhesive composition.

In yet another aspect, the invention relates to a method for assembling a camera module or a sensor, the method comprising bonding an electronic component to a substrate using the adhesive composition.

### Detailed description

In the present specification, the weight average molecular weight (M_{w}) refers to a polystyrene conversion value determined by gel permeation chromatography (GPC) using a solvent, such as tetrahydrofuran, as an eluent.

In the present specification, the term "(meth)acrylic acid" is used as a term including acrylic acid and methacrylic acid.

### (a) Urethane (meth)acrylate oligomer based on a heterocyclic polyol

According to the present invention, the adhesive composition comprises one or more urethane (meth)acrylate oligomer based on a heterocyclic polyol.

The term "urethane (meth)acrylate oligomer" refers to a class of compounds that contain urethane linkages and have (meth)acrylate functional groups, such as urethane multi(meth)acrylate oligomer, multiurethane (meth)acrylate oligomer, and multiurethane multi(meth)acrylate oligomer.

In one preferred embodiment, the urethane (meth)acrylate oligomers are based on an oxygen-containing heterocyclic polyol, a nitrogen-containing heterocyclic polyol or a sulfur-containing heterocyclic polyol. In another preferred embodiment, the urethane (meth)acrylate oligomers contain the residues of heterocyclic polyol in the backbone. In another preferred embodiment, the urethane (meth)acrylate oligomers have a weight average molecular weight from 2000 g/mol to 20000 g/mol, preferably from 2000 g/mol to 8000 g/mol.

In one more preferred embodiment, such urethane (meth)acrylate oligomers include but not limited to those based on isosorbide, isomannide, isoidide, spiroglycol, tetrahydrofuran diol, Corey lactone diol, pyrimidine-2,4-diol, 1,2-dithiane-3,6-diol, p-dithiane-2,5-diol, 2-methylpyridine-3,5-diol, furo[3,2-d]pyrimidine-2,4-diol, 7H-pyrrolo[2,3-d]pyrimidine-2,4-diol, 1,2,3,9-tetrahydropyrrolo[2,1-b]quinazoline-3,7-diol, tetrahydro-2H-pyran-2,3,5-triol, or tris(2-hydroxyethyl)isocyanurate, and in particular is an isosorbide-based urethane (meth)acrylate oligomer or even a urethane (meth)acrylate oligomer having isosorbide residues in backbone.

The adhesive composition of the present invention preferably contains the urethane (meth)acrylate oligomers (a) in an amount of 5 wt% to 60 wt%, and preferably 20 wt% to 50 wt%, based on the weight of the adhesive composition, in terms of excellent curability and adhesion strength.

The adhesive composition of the present invention may contain, in addition to the urethane (meth)acrylate oligomer based on a heterocyclic polyol (a), other urethane (meth)acrylate oligomers, such as polyether based urethane (meth)acrylate oligomer, polyester based urethane (meth)acrylate oligomer, polycarbonate based urethane (meth)acrylate oligomer as long as the effects of the present invention are not impaired. The amount of other urethane (meth)acrylate oligomers is usually no more than 5 wt%, preferably no more than 1 wt%, and more preferably no more than 0.5 wt%, and in particular the adhesive composition contains no other urethane (meth)acrylate oligomers.

### (b) Bismaleimide

The adhesive composition of the present invention contains bismaleimide for the purpose of imparting, to the composition and a cured product thereof, the properties of excellent adhesion to plastics and surface hardening.

The bismaleimides may be aliphatic bismaleimides, alicyclic bismaleimides, aromatic bismaleimides or the combination thereof.

In view of further improving the compatibility with other reactants, especially the urethane (meth)acrylate oligomer based on a heterocyclic polyol, aromatic bismaleimides are preferred.

The aromatic bismaleimide is preferably represented by formula (I), in terms of maintaining excellent strength in a reliability test. 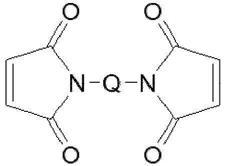 wherein Q is an aromatic group. Exemplary aromatic groups include: 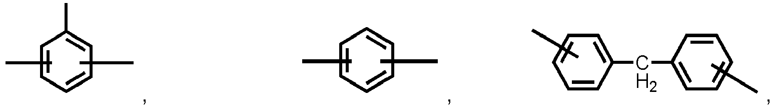 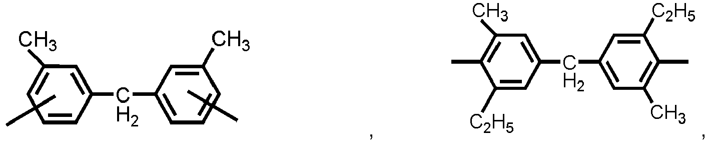 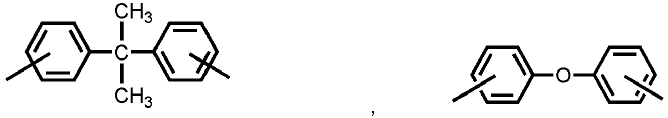 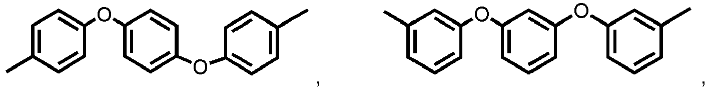 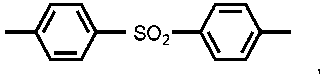 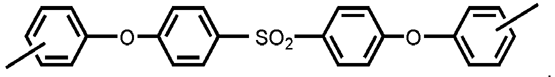 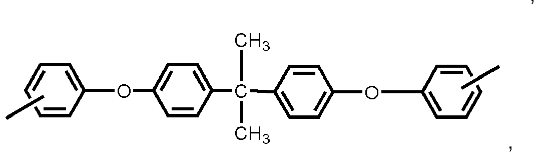 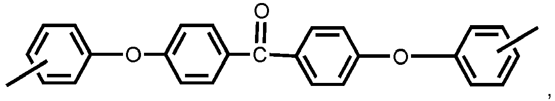 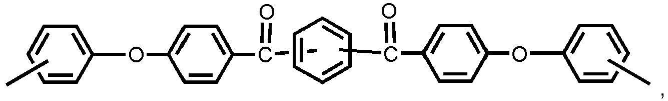 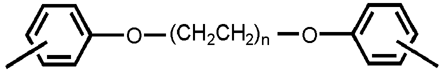 where n is 1-3,

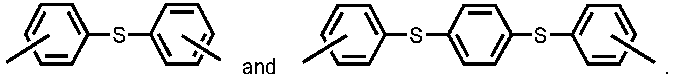

In preferred embodiments, the aromatic bismaleimide is selected from the group consisting of 4,4'-diphenyl methane bismaleimide, 2,2'-bis-[4-(4-maleimidephenoxy)phenyl]propane, and 3,3'-dimethyl-5,5'-diethyl-4,4'-diphenyl methane bismaleimide. Such bismaleimides are commercially available as JBM-200M, JBM-300M and JBM-800M from JFE Chemical.

The adhesive composition of the present invention may contain only one type of bismaleimide or may contain two or more types of bismaleimide.

The adhesive composition of the present invention preferably contains bismaleimide in an amount of in an amount of 5 wt% to 70 wt%, and preferably 20 wt% to 60 wt%, based on the weight of the adhesive composition, in terms of excellent adhesion and maintaining good workability.

### (c) Butadiene resin

The adhesive composition of the present invention also contains butadiene resin as co-monomer in the adhesive composition.

Generally, butadiene resins containing high levels of 1,2-addition, are desirable for the adhesive composition. Also included are the functionalized polybutadienes and poly(butadiene-styrene) random copolymers sold by Ricon Resins, Inc. under the trade names RICON, RICACRYL, and RICOBOND resins. These include polybutadienes containing both low vinyl content such as RICON 130, 131, 134, 142, and polybutadienes containing high vinyl content such as RICON 150, 152, 153, 154, 156, 157, and P30D; also random copolymers of styrene and butadiene including RICON 100, 181, 184, and maleic anhydride grafted polybutadienes and the alcohol condensates derived therefrom such as RICON 130MA8, RICON MA13, RICON 130MA20, RICON 131MAS, RICON 131MA10, RICON MA17, RICON MA20, RICON 184MA6 and RICON 156MA17; also included are polybutadienes which can be used to improve adhesion including RICOBOND 1031, RICOBOND 1731, RICOBOND 2031, RICACRYL 3500, RICOBOND 1756, and RICACRYL 3500; also are included the polybutadienes RICON 104 (25% polybutadiene in heptane), RICON 257 (35% polybutadiene in styrene), and RICON 257 (35% polybutadiene in styrene); also are included are (meth)acrylic functionalized polybutadienes such as polybutadiene diacrylates and polybutadiene dimethacrylates. These materials are sold under the trade names RICACRYL 3100, RICACRYL 3500, and RICACRYL 3801. Also are included are powder dispersions of functional polybutadiene derivatives including, for example, RICON 150D, 152D, 153D, 154D, P30D, RICOBOND 1731 HS, and RICOBOND 1756 HS. Further butadiene resins include poly(butadiene-isoprene) block and random copolymers, such as those with weight average molecular weights of 3,000 to 50,000 g/mol and polybutadiene homopolymers having weight average molecular weights of 3,000 to 50,000 g/mol.

In one preferred embodiment, the butadiene resin is a maleic anhydride grafted polybutadiene.

The adhesive composition of the present invention preferably contains butadiene resin in an amount of in an amount of 1 wt% to 60 wt%, and preferably 5 wt% to 40 wt%, based on the weight of the adhesive composition, in terms of excellent surface hardening and toughness after curing.

### (d) Radical initiator

The radical initiator is not particularly limited, and those generally used in the technical field can be used.

The radical initiator preferably has a 1-hour half-life temperature of 100°C or lower, and more preferably 85°C or lower, in terms of excellent low-temperature curing.

The radical initiator preferably is peroxides and/or azo-compounds. Specific examples of the radical initiator (d) include Perbutyl O (t-butyl peroxy-2-ethylhexanoate), Perhexyl O (t-hexyl peroxy-2-ethylhexanoate), Perocta O (1,1,3,3-tetramethylbutyl peroxy-2-ethylhexanoate), Perbutyl ND (t-butyl peroxyneodecanoate), and Peroyl TCP (bis(4-tert-butylcyclohexyl) peroxydicarbonate) (all of which are produced by NOF Corporation).

The polymerization initiators (d) may be used singly or in combination of two or more.

The adhesive composition of the present invention preferably contains the radical initiator in an amount of 0.5 wt% to 5 wt%, preferably of 1 wt% to 2 wt% based on the weight of the adhesive composition, in terms of excellent curability and stability of adhesion.

### (e) (Meth)acrylic acid ester monomer

The adhesive composition may comprise a (meth)acrylic acid ester monomer as optional co-monomer.

The (meth)acrylic acid ester monomer is widely known to those skilled in the art and may be a monofunctional (meth)acrylic acid ester or a polyfunctional (meth)acrylic acid ester.

Specific examples of monofunctional methacrylic acid esters include n-propyl methacrylate, glycidyl methacrylate, 2-hydroxyethyl methacrylate, 2-methacryloxyethyltrimethoxysilane, 2-methacryloxyethyltriethoxysilane, 3-methacryloxypropyltrimethoxysilane, 3-methacryloxypropylmethyldimethoxysilane, 3-methacryloxypropyltriethoxysilane, 3-methacryloxymethyldiethoxysilane, 4-methacryloxybutyltrimethoxysilane, 4-methacryloxybutyltriethoxysilane, dicyclopentenyloxyethyl methacrylate (e.g., product name "FA-512M," produced by Hitachi Chemical Co., Ltd.), pentamethylpiperidyl methacrylate (e.g., product name "FA-711MM," produced by Hitachi Chemical Co., Ltd.), tetramethylpiperidyl methacrylate (e.g., product name "FA-712HM," produced by Hitachi Chemical Co., Ltd.), methoxy polyethylene glycol methacrylate (e.g., product name "FA-400M," produced by Hitachi Chemical Co., Ltd.), 2-hydroxy-3-acryloyloxypropyl methacrylate (e.g., product name "Light Ester G-201P," produced by Kyoeisha Chemical Co., Ltd.), phenoxyethylene glycol methacrylate (e.g., product name "PHE-1G," produced by Shin-Nakamura Chemical Co., Ltd.), stearyl methacrylate (e.g., product name "S," produced by Shin-Nakamura Chemical Co., Ltd.), 2-methacryloyloxyethyl succinate (e.g., product name "SA," produced by Shin-Nakamura Chemical Co., Ltd.), 3,4-epoxycyclohexylmethyl methacrylate (e.g., product name "Cyclomer M100," produced by Daicel Corporation), and the like.

Specific examples of bifunctional methacrylic acid esters include dipropylene glycol diacrylate (e.g., product name "APG-100," produced by Shin-Nakamura Chemical Co., Ltd.), neopentyl glycol dimethacrylate (e.g., product name "FA-125M," produced by Hitachi Chemical Co., Ltd.), polyethylene glycol #200 dimethacrylate (e.g., product name "FA-220M," produced by Hitachi Chemical Co., Ltd.), EO-modified bisphenol A dimethacrylate (e.g., product name "FA-321M," produced by Hitachi Chemical Co., Ltd.), EO-modified polypropylene glycol #700 dimethacrylate (e.g., product name "FA-023M," produced by Hitachi Chemical Co., Ltd.), ethylene glycol dimethacrylate (e.g., product name "1G," produced by Shin-Nakamura Chemical Co., Ltd.), diethylene glycol dimethacrylate (e.g., product name "2G," produced by Shin-Nakamura Chemical Co., Ltd.), triethylene glycol dimethacrylate (e.g., product name "3G," produced by Shin-Nakamura Chemical Co., Ltd.), polyethylene glycol dimethacrylate (e.g., produced by Shin-Nakamura Chemical Co., Ltd.), 2,2-bis[4-(methacryloxyethoxy)phenyl]propane (e.g., product name "BPE-80N," produced by Shin-Nakamura Chemical Co., Ltd.), ethoxylated bisphenol A dimethacrylate (e.g., produced by Shin-Nakamura Chemical Co., Ltd.), 1,10-decanediol dimethacrylate (e.g., product name "DOD-N," produced by Shin-Nakamura Chemical Co., Ltd.), 1,6-hexanediol dimethacrylate (e.g., product name "HD-N," produced by Shin-Nakamura Chemical Co., Ltd.), 1,9-nonanediol dimethacrylate (e.g., product name "NOD-N," produced by Shin-Nakamura Chemical Co., Ltd.), neopentyl glycol dimethacrylate (e.g., product name "NPG," produced by Shin-Nakamura Chemical Co., Ltd.), ethoxylated polypropylene glycol dimethacrylate (e.g., produced by Shin-Nakamura Chemical Co., Ltd.), glycerin dimethacrylate (e.g., product name "701," produced by Shin-Nakamura Chemical Co., Ltd.), polypropylene glycol dimethacrylate (e.g., produced by Shin-Nakamura Chemical Co., Ltd.), and the like.

The adhesive composition of the present invention may contain only one type of (meth)acrylic acid ester monomer (a), or may contain two or more types of (meth)acrylic acid ester monomers (a).

The adhesive composition of the present invention preferably contains the (meth)acrylic acid ester monomer (a) in an amount of 0 to 70 wt%, and preferably 20 to 40 wt%, based on the weight of the adhesive composition, in terms of excellent curability and crosslink density control.

### (f) Tackifier

The adhesive composition of the present invention may contain a tackifier.

The tackifier preferably has a softening point of 150°C or lower. As a result, the adhesive composition of the present invention has improved elongation and flexibility.

In the present invention, the softening point is measured by a ring and ball method as follows. A sample is packed in a ring, and the part raised from the plane, including the upper end of the ring, is scraped off with a heated spatula. This is disposed in place on a support, and a rigid ball is placed in the centre. The support is put in a glycerin bath, and the temperature is raised at a heating rate of 5.0 ± 0.5°C/min. The humidity when the sample softens and comes into contact with the bottom plate is defined as the softening point.

Usable examples of such tackifier include various resins. These resins are preferably hydrogenated resins. Preferable resins are rosin resins, rosin ester resins, terpene resins, terpene phenol resins, and the like. Examples of hydrogenated resins include a hydrogenated terpene phenol resin (product name: YS Polystar UH, produced by Yasuhara Chemical Co., Ltd.), a hydrogenated petroleum resin (product name: Alcon P-100, produced by Arakawa Chemical Industries, Ltd.), a colourless rosin ester (product names: KE-100, KE-311 or KE-359, produced by Arakawa Chemical Industries, Ltd.), a colourless rosin acid (product names: KR-610, KR-612, KR614, produced by Arakawa Chemical Industries, Ltd.), a colourless rosin diol (product name: D-6011, produced by Arakawa Chemical Industries, Ltd.), and the like.

The adhesive composition of the present invention may contain only one type of tackifier or may contain two or more types of tackifiers.

The adhesive composition of the present invention preferably contains the tackifier in an amount of 0 to 20 wt%, preferably 0.5 to 5 wt% based on the weight of the adhesive composition in terms of obtaining good workability.

### Additives

The adhesive composition of the present invention may further contain other components as additives. Examples of other components are inorganic or organic fillers and adhesive aids including various coupling agents, such as silane and titanate, and rheology modifiers, such as fumed silica. In one preferred, embodiment, the adhesive composition comprises no more than 10 wt%, preferably no more than 5 wt%, and even more preferably no more than 1 wt%, in particular comprise no filler, coupling agent or rheology modifier.

### Physical properties

The adhesive composition of the present invention preferably exhibits excellent adhesive surface hardening after curing. The adhesive surface hardening is measured by coating the adhesive composition with a thickness of 100 µm on a substrate to cure at 80°C for 60 minutes, and pressing a PET film onto the adhesive. If the cured adhesive does not transfer onto the PET film, it will be determined as having good surface hardening. If transfer occurs, it will be evaluated as having poor surface hardening.

The adhesive composition of the present invention preferably exhibits excellent adhesion after curing at 80°C for 1 hour and has a shear strength of no less than 5 MPa, and preferably no less than 10 MPa. The adhesive composition is applied between PC boards with a thickness of 60 µm and a diameter of 4 mm. The shear strength is measured by a die shear tester from Nordson Dage after curing at 80°C for 1 hour. The shear strength is calculated by dividing the measured strength after testing by the area of the adhesive.

The adhesive composition of the present invention preferably exhibits excellent toughness after curing. The toughness is measured by applying the adhesive composition between an LCP substrate (50 x 25mm) and a glass substrate (25 x 10mm) to obtain an adhesive layer with a diameter of 1mm. The impact resistance is evaluated using a pendulum impact tester PST-300 from Shinyei after curing at 80°C for 1 hour. The angle at which the glass delaminates is measured. If delamination occurs between 20 and 40°, it will be evaluated as poor toughness. If delamination occurs between 40 and 70°, it will be evaluated as good. And if no delamination occurs at 70°, it will be evaluation as very good.

### Use

The adhesive composition of the present invention is preferably used for assembling a camera module and a sensor. In the above, the camera module and the sensor are not particularly limited, and examples include small camera modules and small sensors used for smartphones and the like.

### Examples

### Materials

Urethane (meth)acrylate oligomer 1 is an acrylate terminated urethane oligomer having isosorbide residue in backbone, commercially available as HA-HKL02 from Shin-Nakamura Chemical.

Urethane (meth)acrylate oligomer 2 is (meth)acrylate terminated urethane oligomer based on polycarbonate polyol, commercially available as UF-8001G from Kyoeisha Chemical.

Urethane (meth)acrylate oligomer 3 is (meth)acrylate terminated urethane oligomer based on polyester polyol, commercially available as UN-333 from Negami Chemical.

Urethane (meth)acrylate oligomer 4 is (meth)acrylate terminated urethane oligomer based on polyether polyol, commercially available as UN-6304 from Negami Chemical.

Bismaleimide is 2,2-bis[4-(4-maleimidophenoxy)phenyl]propane commercially available as JBM-800N from JFE Chemical.

Polybutadiene is a polybutadiene functionalized with maleic anhydride (about 10% maleic anhydride) having a molecular weight about 5000, commercially available as Ricon131MA10 from Arakawa Chemical.

(Meth)acrylate monomer 1 is phenoxyethyl acrylate commercially available as Viscoat 192 from Osaka Organic Chemical.

(Meth)acrylate monomer 2 is isobornyl acrylate commercially available as IBXA from Osaka Organic Chemical.

Radical initiator is di(4-tert-butylcyclohexyl) peroxydicarbonate commercially available as Perkadox16 from NOF Corporation.

Tackifier is rosin ester having softening point of 90°C to 100°C commercially available as KE-311 from Arakawa Chemical.

Adhesive compositions of Examples 1 to 5 and Comparative Examples 1 to 5 were each prepared by mixing components at the composition ratios shown in Table 1. Specifically, a (meth)acrylic acid ester monomer in which a tackifier (if present) was dissolved, a urethane (meth)acrylate oligomer, a bismaleimide, a polybutadiene, a polymerization initiator, other additives, etc., were well dispersed using a planetary mixer at 30 rpm for 60 min, followed by vacuum defoaming, thereby obtaining adhesive compositions.

The physical properties were each evaluated as follows and shown in Table 1.

### Adhesive surface hardening

The adhesive surface hardening was measured by coating the adhesive composition with a thickness of 100 µm on a substrate to cure at 80°C for 60 minutes, and pressing a PET film onto the adhesive. If the cured adhesive does not transfer onto the PET film, it will be determined as having good surface hardening. If transfer occurs, it will be evaluated as having poor surface hardening.

### Adhesion test

The adhesion test was performed by applying the adhesive composition between PC boards with a thickness of 60 µm and a diameter of 4 mm. The shear strength was measured by die shear tester (from Nordson Dage) after curing at 80°C for 1 hour. The shear strength was calculated by dividing the measured strength after testing by the area of the adhesive.

### Toughness test

The toughness was measured by applying the adhesive composition between an LCP substrate (50 x 25mm) and a glass substrate (25 x 10mm) to obtain an adhesive layer with a diameter of 1mm. The impact resistance was evaluated using a pendulum impact tester PST-300 after curing at 80°C for 1 hour. The angle at which the glass delaminates is measured. If delamination occurs between 20 and 40°, it will be evaluated as poor toughness. If delamination occurs between 40° and 70°, it will be evaluated as good. And if no delamination occurs at 70°, it will be evaluation as very good.

**Table 1. Adhesive formulations (in weight parts) and test results**

| Compositions | Ex.1 | Ex.2 | Ex.3 | Ex.4 | Ex.5 | Com.Ex. 1 | Com.Ex. 2 | Com.Ex. 3 | Com.Ex. 4 | Com.Ex. 5 | Com.Ex. 6 | Com.Ex. 7 | Com.Ex. 8 |
|---|---|---|---|---|---|---|---|---|---|---|---|---|---|
| Urethane (meth)acrylate oligomer 1 | 40 | 20 | 30 | 50 | 30 | - | - | - | - | - | - | 40 | 30 |
| Urethane (meth)acrylate oligomer 2 | - | - | - | - | - | 30 | - | - | 20 | - | - | - | - |
| Urethane (meth)acrylate oligomer 3 | - | - | - | - | - | - | 30 | - | - | - | - | - | - |
| Urethane (meth)acrylate oligomer 4 | - | - | - | - | - | - | - | 20 | - | 40 | - | - | - |
| Bismaleimide | 40 | 60 | 30 | 20 | 20 | 40 | 30 | 20 | 20 | 10 | 50 | - | 40 |
| Polybutadiene | 20 | 20 | 10 | 5 | 10 | 10 | 20 | 10 | 5 | 5 | 30 | 20 | - |
| Radical initiator | 2 | 2 | 2 | 1 | 1 | 2 | 2 | 2 | 1 | 1 | 2 | 1 | 2 |
| (Meth)acrvlate monomer 1 | - | - | 30 | 20 | 40 | 20 | - | - | 40 | 40 | 20 | - | 30 |
| (Meth)acrylate monomer 2 | - | - | - | - | - | - | 20 | 50 | - | - | - | 40 | - |
| Tackifier | - | - | 5 | 3 | - | - | - | - | 5 | 3 | - | - | - |
| Adhesive surface hardening | Good | Good | Good | Good | Good | Bad | Bad | Good | Bad | Good | Good | Bad | Bad |
| Adhesion strength on PC after thermal curing (MPa) | 10 | 18 | 15 | 16 | 12 | 13 | 20 | 7 | 12 | 5 | 4 | 12 | 9 |
| Toughness | Good | Good | Good | Good | Good | Very Good | Poor | Poor | Very Good | Poor | Poor | Good | Poor |

### Examples 1 to 5

As shown in Table 1, the adhesive compositions of Examples 1 to 5 exhibited excellent surface hardening, adhesion strength on PC and toughness after curing.

### Comparative Examples 1 to 8

As shown in Table 1, Comparative Examples 1 and 4 containing polycarbonate polyol based urethane acrylate oligomer exhibited poor surface hardening after curing although the toughness was good.

Comparative Example 2 containing polyester polyol based urethane acrylate oligomer exhibited poor surface hardening after curing and poor adhesive toughness.

Comparative Example 3 and 5 containing polyether polyol based urethane acrylate oligomer exhibited poor adhesive strength and toughness of the adhesives.

Comparative Examples 6 containing no urethane acrylate oligomer exhibited poor adhesion strength after curing and poor adhesive toughness.

Comparative Examples 7 containing no bismaldeimide exhibited poor exhibited poor surface hardening after curing.

Comparative Examples 8 containing no butadiene resin exhibited poor exhibited poor surface hardening after curing and poor adhesive toughness.

## Claims

1. An adhesive composition comprising:
(a) a urethane (meth)acrylate oligomer based on a heterocyclic polyol;
(b) a butadiene resin;
(c) a bismaleimide; and
(d) a radical initiator.

2. The adhesive composition according to claim 1, wherein the urethane (meth)acrylate oligomer is based on an oxygen-containing heterocyclic polyol, a nitrogen-containing heterocyclic polyol or a sulfur-containing heterocyclic polyol.

3. The adhesive composition according to claim 1 or 2, wherein the urethane (meth)acrylate oligomer is based on a heterocyclic polyol selected from the group consisting of isosorbide, isomannide, isoidide, spiroglycol, tetrahydrofuran diol, Corey lactone diol, pyrimidine-2,4-diol, 1,2-dithiane-3,6-diol, p-dithiane-2,5-diol, 2-methylpyridine-3,5-diol, furo[3,2-d]pyrimidine-2,4-diol, 7H-pyrrolo[2,3-d]pyrimidine-2,4-diol, 1,2,3,9-tetrahydropyrrolo[2,1-b]quinazoline-3,7-diol, tetrahydro-2H-pyran-2,3,5-triol, tris(2-hydroxyethyl)isocyanurate, and combination thereof, and preferably is isosorbide.

4. The adhesive composition according to any of the preceding claims, wherein the butadiene resin is a maleic anhydride grafted polybutadiene.

5. The adhesive composition according to any of the preceding claims, wherein the bismaleimide is an aromatic bismaleimide, and preferably is selected from the group consisting of 4,4'-diphenyl methane bismaleimide, 2,2'-bis-[4-(4-maleimidephenoxy)phenyl]propane, 3,3'-dimethyl-5,5'-diethyl-4,4'-diphenyl methane bismaleimide, and combination thereof.

6. The adhesive composition according to any of the preceding claims, wherein the radical initiator is selected from peroxides and azo-compounds, and is preferably selected from the group consisting of di(4-tert-butylcyclohexyl) peroxydicarbonate, tert-butyl peroxyneodecanoate, tert-butyl peroxypivalate, dilauroyl peroxide, 2,2'-azodi(isobutyronitrile), 2,5-dimethyl-2,5-di(2-ethylhexanoylperoxy)-hexane, tert-butyl peroxy-2-ethylhexanoate, tert-butyl peroxybenzoate, and combination thereof.

7. The adhesive composition according to any of the preceding claims, further comprising a (meth)acrylic acid ester monomer.

8. The adhesive composition according to any of the preceding claims, further comprising a tackifier.

9. The adhesive composition according to any of the preceding claims, further comprising a urethane (meth)acrylate oligomer other than component (a) in an amount of no more than 5 wt%, preferably no more than 1 wt%, and more preferably no more than 0.5 wt%, based on the weight of the adhesive composition.

10. The adhesive composition according to any of the preceding claims, comprising no urethane (meth)acrylate oligomer other than component (a).

11. Use of the adhesive composition according to any of the preceding claims in assembling a camera module or a sensor.

12. A cured product obtainable by curing the adhesive composition according to any one of claims 1 to 10.

13. A method for assembling a camera module or a sensor, the method comprising bonding an electronic component to a substrate using the adhesive composition according to any one of claims 1 to 10.
